(19) Europäisches Patentamt
European Patent Office
Office européen des brevets

(11) Veröffentlichungsnummer: **0 009 110**
**B1**

(12) # EUROPÄISCHE PATENTSCHRIFT

(45) Veröffentlichungstag der Patentschrift: **24.03.82**

(51) Int. Cl.³: **C 09 D 5/02**, C 09 D 7/12, C 08 K 5/17

(21) Anmeldenummer: **79102904.4**

(22) Anmeldetag: **10.08.79**

(54) **Verwendung von Polyglycidylaminen als Additive in wässrigen Anstrichmitteln.**

(30) Priorität: **23.08.78 DE 2836764**

(43) Veröffentlichungstag der Anmeldung: **02.04.80 Patentblatt 80/7**

(45) Bekanntmachung des Hinweises auf die Patenterteilung: **24.03.82 Patentblatt 82/12**

(84) Benannte Vertragsstaaten: **AT BE CH DE FR GB IT NL SE**

(56) Entgegenhaltungen: **keine**

(73) Patentinhaber: **BASF Aktiengesellschaft, Carl-Bosch-Strasse 38, D-6700 Ludwigshafen (DE)**

(72) Erfinder: **Oppenlaender, Knut, Dr. Dipl.-Chem., Otto-Dill-Strasse 23, D-6700 Ludwigshafen (DE)**
Erfinder: **Strickler, Rainer, Dr. Dipl.-Chem., Schroederstrasse 14, D-6900 Heidelberg (DE)**
Erfinder: **Geelhaar, Hans Joachim, Dr. Dipl.-CHem., Max-Slevogt-Strasse 7, D-6710 Frankenthal (DE)**
Erfinder: **Lamprecht, Josef, Dr. Dipl.-Phys., Londoner Ring 11, D-6700 Ludwigshafen (DE)**
Erfinder: **Penzel, Erich, Dr. Dipl.-Chem., Carl-Bosch-Strasse 86, D-6700 Ludwigshafen (DE)**
Erfinder: **Ley, Gregor, Dr. Dipl.-Chem., In den Trankstuecken, D-6719 Wattenheim (DE)**

**EP 0 009 110 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

## Verwendung von Polyglycidylaminen als Additive in wässrigen Anstrichmitteln

Diese Erfindung betrifft die Verbesserung der Nasshaftung und Blockfestigkeit von Anstrichen auf Basis wässriger Polymerdispersionen.

Die Haftung von Anstrichen auf Basis wässriger Polymerdispersionen auf glatten, nicht bewitterten, mit Lacken auf Öl- oder Alkydharzbasis beschichteten Untergründen ist oft schon in trokkenem Zustand unbefriedigend. Sie ist zudem von der Durchfeuchtung abhängig und nimmt mit zunehmender Durchfeuchtung der Anstriche im allgemeinen ab. Hierdurch werden in der Praxis oft Anstrichschäden verursacht, und es hat daher nicht an Versuchen gefehlt, die Nasshaftung von Anstrichen auf Basis von wässrigen Polymerdispersionen zu verbessern. So hat man beispielsweise schon versucht (vgl. US-PS Nr. 3356627) die Nasshaftung dadurch zu verbessern, dass man in die verwendeten Bindemittelpolymerisate spezielle Hilfsmonomere, z.B. basische Acrylate, wie Ureidoacrylate einpolymerisiert hat. Auch durch Einpolymerisieren von Glycidylgruppen aufweisenden Hilfsmonomeren und anschliessende Umsetzung der Glycidylgruppen mit Ammoniak, Hexymethylentetramin oder niederen primären oder sekundären Monoaminen, wurde schon versucht (vgl. DE-OS Nr. 1595501, 2451772 und 2508588), die Nasshaftung von damit hergestellten Anstrichen zu verbessern. Schliesslich wurde schon vorgeschlagen (DE-OS Nr. 2451719) die Nasshaftung von Bindemittel-Anstrichpolymerisaten durch einpolymerisierte $\alpha,\beta$-ungesättigte Halogenverbindungen und anschliessendes Umsetzen mit Ammoniak oder Hexamethylentetramin zu verbessern. Auch das Ansetzen von Carboxylgruppen enthaltenden Bindemittelpolymerisaten mit Alkyleniminen, wie besonders Äthylenimin und 1,2-Propylenimin, soll (vgl. britische Patentschrift Nr. 1434535) die Nasshaftung verbessern. Die auf diese bekannten Arten verbesserten Dispersionen von Bindemittelpolymerisaten ergeben jedoch Anstriche, deren Nasshaftung weiter zu wünschen übrig lässt und die zudem oft blocken. Ausserdem ist die Nasshaftung von Anstrichen, die mit derartigen bekannten Bindemitteldispersionen hergestellt sind, häufig sehr stark von den zusätzlich in den Anstrichmitteln enthaltenden Komponenten, z.B. Pigmenten, abhängig und manchmal schwer reproduzierbar.

Es wurde nun gefunden, dass man die Nasshaftung von Anstrichen auf Basis wässriger Polymerdispersionen stark verbessern kann, wenn man als Additive für die wässrigen Anstrichmittel Polyglycidylamine mit mindestens 2 an wasserstoffatomfreie Stickstoffatome gebundenen Glycidylgruppen oder deren Salze einsetzt, die gegebenenfalls Äthergruppen aufweisen können. Die Polyglycidylamine werden den wässrigen Anstrichmitteln im allgemeinen in Mengen von 1 bis 15 Gewichtsprozent, vorzugsweise von 2 bis 10 Gewichtsprozent, bezogen auf das in den Anstrichmitteln enthaltene Bindemittelpolymerisat, d.h. die Polymerisate der Polymerdispersionen, zugefügt. Der Zusatz kann z.B. als Lösung oder Emulsion erfolgen und der pH-Wert der Anstrichmittel kann im allgemeinen 4 bis 11 betragen. Im Hinblick auf die Verarbeitbarkeit der Mischungen (pot life) liegt der pH-Wert, der die Glycidylamine enthaltenden wässrigen Anstrichmittel vorzugsweise im Bereicht von 6 bis 9, da Gemische eines derartigen pH-Werts besonders lange verarbeitbar sind.

Als Polyglycidylamine mit mindestens 2 Glycidylgruppen sind besonders Alkyldiglycidylamine mit 1 bis 10, insbesondere mit 4 C-Atomen in den Alkylgruppen, von besonderem Interesse. Besonders bewährt haben sich N-n-Butyl-N,N-diglycidylamin und N-Isobutyl-N,N-diglycidylamin sowie ferner N-Methyl-N,N-diglycidylamin, N-Äthyl-N,N-diglycidylamin, N-n-Propyl-N,N-diglycidylamin, N-tert.-Butyl-N,N-diglydicylamin, N-2-Äthylhexyl-N,N-diglycidylamin und N-n-Decyl-N,N-diglycidylamin. Weitere geeignete Polyglycidylamine mit mindestens 2 Glycidylresten sind N,N'-Dialkyl-N,N'-diglycidylpolymetylendiamine mit meist 2 bis 10 Methylengruppen und jeweils 1 bis 10, insbesondere 4 C-Atome, in den Alkylgruppen, wie N,N'-Dimethyl-N,N'-diglycidyläthylendiamin, -propylendiamin und -butylendiamin, N,N'-Diäthyl-N,N'-diglycidyläthylendiamin und -propylendiamin, N,N'-Di-n-butyl-N,N'-diglycidyltetramethylendiamin und N,N'-Diisobutyl-N,N'-trimethylendiamin. Geeignete Polyglycidylamine mit Äthergruppen sind z.B. solche der allgemeinen Formel (I):

$$X_2N - R^1 - (O - R^2 -)_n O - R^1 - NX_2,$$

in der

X für 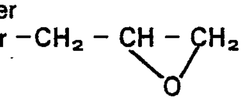

$R^1$ für 1-4 C-Atome enthaltende Alkyl- oder Alkylengruppen,

$R^2$ für 1 bis 20 C-Atome enthaltende Alkylengruppen und

n für 0 bis 50

stehen,

und die z.B. gemäss der DE-OS Nr. 2735765 durch Umsetzen von Ätherdiaminen der allgemeinen Formel (II):

$$H_2N - R^1 - (O - R^2 -)_n - O - R^1 - NH_2,$$

in der $R^1$, $R^2$ und n die oben angegebenen Bedeutungen haben, mit Epichlorhydrin bei erhöhter Temperatur hergestellt sein können.

Genannt sei beispielsweise Tetraglycidyl-4,7-dioxadecan-1,10-diamin, Tetraglycidyl-4,9-dioxadodecan-1,2-diamin, Tetraglycidyl-4,7,10-trioxatridecan-1,13-diamin, Tetraglycidyl-4,7,10-trioxatridecan-1,13-diamin, Tetraglycidyl-4,7-dioxadecan-1,10-diamin, Tetraglycidyl-4,9-dioxadodecan-1,12-diamin, Tetraglycidyl-4-oxaheptan-1,7-diamin und Tetraglycidyl-4,11-dioxatetradecan-1,14-diamin. Die Polyglycidylamine,

die 2 bis 4 Glycidylgruppen aufweisen, sind von besonderem Interesse; sie enthalten meist 0 bis 4, insbesondere 1 bis 3 Äthergruppen.

Die Polyglycidylamine können den wässrigen Anstrichmitteln, z.B. den wässrigen Dispersionsfarben als solche, z.B. in gelöster oder emulgierter Form oder auch in Form ihrer Salze zugesetzt werden. Als Salze sind solche mit niederen Dialkylsulfaten, die 1 bis 4 C-Atome enthaltende Alkylgruppen aufweisen, vorzugsweise Dimethylsulfat, von besonderem Interesse. Ferner geeignet sind Sulfate, Hydrogensulfate, Acetate und Formiate.

Polyglycidylamine können erfindungsgemäss z.B. üblichen wässrigen Dispersionsfarben zugesetzt werden und dies erfolgt vorzugsweise unmittelbar vor deren Verarbeitung. Die Dispersionsfarben können die hierfür üblichen Polymerisatdispersionen als Bindemittel enthalten. Beispiele hierfür sind wässrige Dispersionen von Homo- und Copolymerisaten aus meist 1 bis 10, vorzugsweise 2 bis 4 C-Atome im Alkoholrest enthaltenden Alkylestern der Acryl- und/oder Methacrylsäure, wie insbesondere Äthylacrylat, n-Butylacrylat, Isobutylacrylat und Methylmethacrylat. Als Comonomere für derartige Polyacrylatdispersionen sind vinylaromatische Verbindungen, wie besonders Styrol, Vinylester, wie besonders Vinylacetat und Vinylpropionat sowie gegebenenfalls in untergeordneten Mengen Acrylnitril, α,β-monoolefinisch ungesättigte Mono- und/oder Dicarbonsäuren, z.B. Acrylsäure, Methacrylsäure und Fumarsäure und/oder deren Amide üblich. Geeignete Bindemittel sind auch wässrige Dispersionen von Copolymerisaten des Vinylacetats mit Vinylchlorid und Äthylen sowie wässrige Dispersionen von carboxylierten Butadienstyrolcopolymerisaten. Derartige, in wässriger Dispersion vorliegende Copolymerisate haben im allgemeinen eine minimale Filmbildetemperatur von 0 bis 80, vorzugsweise von 15 bis 50°C, und enthalten im allgemeinen die hierfür üblichen Emulgier- und Dispergierhilfsmittel. Die daraus in an sich üblicher Weise hergestellten Anstrichmittel bzw. Dispersionsfarben enthalten zusätzlich noch die üblichen Pigmente und Füllstoffe, wie Titandioxid und Calzit sowie Filmbildehilfsmittel, Konservierungsmittel und Verdickungsmittel. Als wässrige Anstrichmittel im Sinne der Erfindung sind auch Kunstharzgebundene Putze, Grundierungsmittel und farblose Deckbeschichtungen, z.B. Glanzüberzüge, sowie auch wasserverdünnbare Lacke zu verstehen. Beispielsweise kann die Nasshaftung auf Alkydharzen durch Grundieren der Alkydharzlackfläche mit einer Grundierung aus einer wässrigen Lösung oder Emulsion der Polyglycidylamine oder ihrer Salze beim anschliessenden Streichen mit einer übliche Dispersionsfarbe verbessert werden, auch dann, wenn die Grundierung zuvor getrocknet war.

In manchen Fällen ist es auch von Vorteil, die wässrige Bindemitteldispersion oder die wässrige Dispersionsfarbe durch Zugabe üblicher Emulgatoren, insbesondere wie sie für die Herstellung der betreffenden Bindemitteldispersion eingesetzt sind, nachzuseifen, wobei meist Mengen von 0,5 bis 5 Gewichtsprozent Emulgator, bezogen auf die Menge des Bindemittelpolymerisats, ausreichen. Anstriche, die unter erfindungsgemässer Verwendung von Polyglycidylaminen hergestellt sind, haben eine stark verbesserte Nasshaftung, insbesondere auf Alkydharzuntergründen. Dabei ist der Effekt der Verbesserung der Nasshaftung im wesentlichen nur von der Menge des verwendeten Polyglycidylamins, nicht aber von der restlichen Zusammensetzung des Anstrichmittels abhängig, d.h. die Nasshaftung eines Polyglycidylamine als Additiv enthaltenden Anstrichs ist z.B. praktisch unabhängig von dem darin enthaltenden Pigment. Die Verbesserung der Blockfestigkeit von Anstrichen auf Basis von wässrigen Dispersionsfarben durch die erfindungsgemässen Additive führt beispielsweise zu einer Verminderung des Verklebens gestrichener Türen, Fenster oder von gestapelten beschichteten Werkstücken, insbesondere bei hochsommerlichen Temperaturen.

Die in den folgenden Beispielen angegebenen Werte für die Nasshaftung sowie für das Blocken von Anstrichen auf Basis unpigmenter wässriger Polymerdispersionen wurden nach den folgenden Tests bestimmt

A *Bestimmung der Trocken- und Nasshaftung von Anstrichen aus Polymerdispersionen auf Alkydharzuntergründen:*

1) *Vorbereitung des Untergrunds:*

Aluminiumbleche (Dicke 1 mm) werden mit einem Schwingschleifer auf eine Rauhtiefe von etwa 20 μm aufgerauht.

Auf diese Bleche wird mit einer Rakel (Rakelspaltweite 120 μm) ein 32 cm langer und 6 cm breiter Streifen handelsübliches Alkydharz (Glasurit Universalweiss EA) aufgebracht. Nach 24 h Lagerung im Klimaraum bei 23°C und 50% relativer Luftfeuchte werden die beschichteten Bleche 5 d bei 45°C im Umluftschrank getrocknet. Nach einer weiteren Lagerung von 3 bis 10 d im Klimaraum können die Untergründe verwendet werden.

2) *Aufstreichen der Polymerdispersion:*

Auf vorbereitete Alkydharzuntergründe wird mit einer 250 μm-Rakel (Breite 4 cm) die zu prüfende Polymerdispersion aufgestrichen. In die noch nasse Dispersion wird ein 6 cm breiter, faltenfreier Streifen eines Baumwollgewebes (Kaliko) unter leichtem Druck eingelegt und sofort durch 3maliges Hin- und Herbewegen einer 250 μm Rakel weitere Dispersion aufgebracht.

Nach einer Trockenzeit von 3 bis 4 d bei Dispersionen werden die Ränder der Probestreifen abgeschnitten, so dass eine Streifenbreite von 3,5 cm entsteht.

3) *Bestimmung der Haftfestigkeit:*

Die Probestreifen werden zur Hälfte 2 h in Wasser gestellt und anschliessend das Baumwollgewebe von Hand oder mit Hilfe einer Rollenschälvorrichtung nach DIN 53289 auf einer Reissmaschine abgezogen. Die Abzugsgeschwindigkeit beträgt 1 m/min. Dabei werden die Art des Bruchbildes beurteilt und die Schälkraft gemessen, beides im gewässerten Teil des Probestreifens; die Schälkraft wird auf die Breite der Probe bezogen.

B *Blocktest*

Die Mischungen Polymerdispersionen/Polyglycidylamin werden in den angegebenen Konzentrationen durch Einrühren von Hand oder mit einem Laborrührer hergestellt und über Nacht bei Raumtemperatur stehenlassen. Am folgenden Morgen werden sie mit einer Kastenrakel (Spalthöhe 120 µm) auf Lenetafolien aufgerakelt und 3 min bei 80°C getrocknet. Die Beschichtungen werden 8 d bei 23°C und 50% relativer Luftfeuchte gelagert, in 4 $cm^2$ grosse Stücke zerschnitten, je zwei der Stücke mit der beschichteten Seite aufeinandergelegt und zwischen Glasplatten unter einer Belastung von 1,5 kg/$cm^2$ bei der angegebenen Temperatur in einem Umluftschrank 16 h gelargert. Dann wird abgekühlt, entlastet und beurteilt. Dabei bedeutet:

Note 1 = Folien fallen auseinander
Note 2 = Folien haften leicht
Note 3 = Folien haften stark
Note 4 = beginnender Ausriss am Rande
Note 5 = Ausrisse in der Fläche
Note 6 = total ausgerissen
Note x = verklebt, nicht mehr zu trennen

Die in den folgenden Beispielen angegebenen Teile und Prozente beziehen sich auf das Gewicht.

*Beispiele 1 bis 3*

Zu jeweils 100 Teilen etwa 50%iger wässriger handelsüblicher Dispersionen von Copolymerisaten aus:

1) 45 Teilen n-Butylacrylat und 55 Teile Styrol,
2) 60 Teilen Methacrylsäuremethylester und 40 Teilen 2-Äthylhexylacrylat,
3) gleichen Teilen Methacrylsäuremethylester und n-Butylacrylat,

gibt man jeweils 5 Teile einer 20%igen wässrigen Lösung von N,N-Polyglycidylamin der Formel:

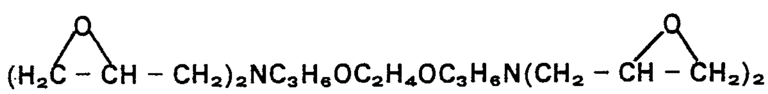

(A)

bzw.

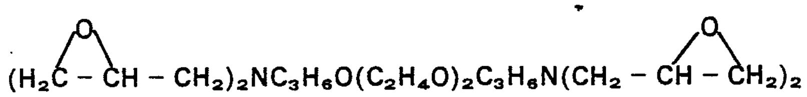

(B)

Mit den Gemischen wird wie oben angegeben, die Haftfestigkeit (nass) sowie die Blockfestigkeit bestimmt. Die Ergebnisse sind in der folgenden Tabelle zusammengestellt:

Tabelle

| Dispersion-gemisch | Haftfestigkeit (N/3,5 cm) nass | Blocknote bei T | (°C) |
|---|---|---|---|
| 1 A | 24,5 | 2 | 70 |
| 1 B | 34,3 | 2 | 70 |
| 2 A | 29,4 | — | — |
| 2 B | 30,4 | — | — |
| 3 A | 24,5 | 2 | 70 |
| 3 B | 10,8 | 2 | 70 |
| Im Vergleich hierzu Dispersion | | | |
| 1 | 1 | 6 | 50 |
| 2 | 1 | — | — |
| 3 | 1 | 6 | 40 |

Die hier angegebenen Gemische aus Polymerisatdispersionen und Polyglycidylaminen sind beispielsweise als Grundierungen für Anstriche auf Alkydharzuntergründen geeignet.

*Beispiele 4 bis 6*

Jeweils 248 Teile der 50%igen Polymerdispersion 1 bzw. 2 bzw. 3 werden mit jeweils:

12,5 Teilen Wasser,
0,9 Teilen 25%iger wässriger Ammoniaklösung,
0,9 Teilen handelsüblichem, silikonfreiem Entschäumer,
6,8 Teilen einer 25%igen wässrigen Lösung einer niedermolekularen Polyacrylsäure (handelsübliches Dispergierhilfsmittel),
45,3 Teilen Propylenglykol,
124 Teilen Rutil
10 Teilen 4%iger wässriger Lösung einer handelsüblichen mittelviskosen Hydroxyäthylcellulose
8,3 Teilen Butylglykol, und
10 Teilen N-n-Butyl-N,N-diglycidylamin

in üblicher Weise gemischt. Man erhält pigmentierte Anstrichfarben, die auf alten Alkydharzanstrichen eine besonders gute Nasshaftung aufweisen.

Demgegenüber lösen sich zum Vergleich hergestellte Anstriche auf alten Alkydharzanstrichen aus solchen Anstrichfarben unter dem Einfluss von Wasser verhältnismässig rasch, wenn sie bei sonst gleicher Zusammensetzung keine Glycidylamineverbindung enthalten.

*Beispiele 7 bis 21*

Wie in den Beispielen 4 bis 6 angegeben, werden unter Verwendung der Dispersionen 1, 2 und 3 Farben unter Einsatz von jeweils 4 Teilen der folgenden Polyglycidylamine anstelle der bei den Beispielen 4 bis 6 verwendeten 10 Treile N-n-Butyl-N,N-diglycidylamin hergestellt;

7 bis 9

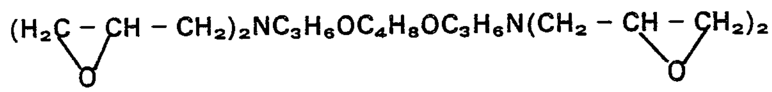

10 bis 12

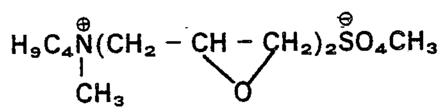

13 bis 15

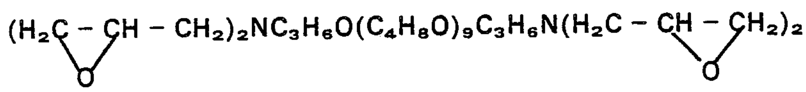

16 bis 18

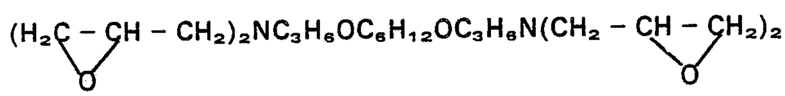

19 bis 21

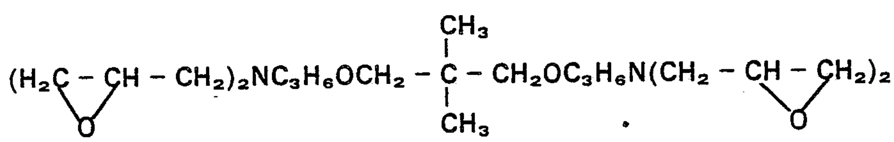

Die Farben wurden einem Nasshaftungstest unterzogen, bei dem sie mit einer 200 μm-Rakel, wie oben unter A angegeben, auf den vorbereiteten Alkydharzuntergrund aufgebracht wurden und nach dem Trocknen jeweils 5 mal einem Gefrierauftauzyklus (6 h bei Raumtemperatur in Wasser lagern, anschliessend 16 h bei −20°C einfrieren und dann wieder auftauen). Nach dem 5. Auftauen wurden Haftfestigkeit und Blasenbildung an den Prüfstreifen beurteilt und dabei weder Blasenbildung noch Ablösen der Anstriche beobachtet.

**Patentanspruch**

Verwendung von gegebenenfalls Äthergruppen aufweisenden Polyglycidylaminen mit mindestens 2 an wasserstoffatomfreie Stickstoffatome gebundenen Glycidylgruppen oder deren Salzen als Additive in wässrigen Anstrichmitteln.

**Claim**

Use of polyglycidylamines which contain at least two glycidyl groups bonded to hydrogen-free nitrogen atoms and which may or may not contain ether groups, or their salts as additives in aqueous paints.

**Revendication**

Utilisation, comme additifs dans des moyens d'enduction aqueux, de polyglycidylamines (ou leurs sels) présentant éventuellement des groupes éther et possédant au moins deux groupes glycidyle liés à des atomes d'azote libres d'atome d'hydrogène.